(19) **Europäisches Patentamt**
**European Patent Office**
**Office européen des brevets**

(11) **EP 4 312 189 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **23185099.1**

(22) Anmeldetag: **12.07.2023**

(51) Internationale Patentklassifikation (IPC):
**G06T 7/50** (2017.01)   **G01C 3/00** (2006.01)
**G06T 7/73** (2017.01)   **G06K 7/00** (2006.01)
**G01B 11/02** (2006.01)   **G01C 3/12** (2006.01)

(52) Gemeinsame Patentklassifikation (CPC):
**G06T 7/74; G01B 11/026; G01C 3/12; G06T 7/50;**
G06T 2207/30196; G06T 2207/30204

(54) **SYSTEM ZUM ERMITTELN DES ABSTANDS EINES OBJEKTS**

SYSTEM FOR DETERMINING THE DISTANCE OF AN OBJECT

SYSTÈME DE DÉTERMINATION DE LA DISTANCE D'UN OBJET

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.07.2022 DE 102022119057**

(43) Veröffentlichungstag der Anmeldung:
**31.01.2024 Patentblatt 2024/05**

(73) Patentinhaber: **SICK AG**
**79183 Waldkirch (DE)**

(72) Erfinder:
• **FETH, Patrik**
**79211 Denzlingen (DE)**
• **WÜSTEFELD, Martin**
**79350 Sexau (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
CN-A- 106 127 163    CN-A- 111 561 906
CN-A- 113 256 731    US-A1- 2017 031 369
US-B2- 10 832 548

**Beschreibung**

Die Erfindung betrifft ein System zum Ermitteln des Abstands eines Objekts bezüglich einer Referenzposition.

Die Messung der Entfernung bzw. des Abstands eines Objekts bezogen auf einen Sensor erfolgt üblicherweise über eine Laufzeitmessung von Signalen des Sensors oder mittels frequenzmodulierter Verfahren. Ferner sind algorithmische Verfahren zur Abstandmessung bekannt, die beispielsweise sogenannte "Disparity Maps" einer Stereokamera verwenden, um ein dreidimensionales Bild der Umgebung der Stereokamera zu erzeugen. Anhand dieses dreidimensionalen Bildes lässt sich der Abstand von Objekten bezogen auf die Stereokamera ermitteln.

Diese bekannten Verfahren zur Abstandsmessung erfordern jedoch dezidierte Sensoren bzw. Kameras, die nur zur Abstandsmessung einsetzbar sind. Solche 3D-Sensoren wie beispielsweise Kameras zur Laufzeitmessung (TOF-Kameras) oder Stereokameras sind jedoch im Vergleich zu monokularen Kameras teuer und weisen darüber hinaus eine relativ geringe laterale Auflösung auf. Die geringe laterale Auflösung dieser Sensoren im Vergleich zu monokularen Kameras verhindert die Verwendung dieser Sensoren beispielsweise bei der Ermittlung von Objektmerkmalen, die für eine fortgeschrittene Bildanalyse erforderlich sind, z.B. bei einer Objektklassifizierung und Objektidentifikation oder bei einer feingranularen Richtungs- oder Posenschätzung von Objekten bzw. Personen.

Darüber hinaus sind zwar Ansätze bekannt, welche die Schätzung des Abstands eines Objekts mittels einer monokularen Kamera ermöglichen. Diese Ansätze beruhen jedoch häufig auf vordefinierten Annahmen, beispielsweise bezüglich der Größe von Personen. Die Annahmen können jedoch zu Fehlern bei der Abstandsmessung führen, beispielsweise dann, wenn die Annahmen dem tatsächlich vorhandenen Objekt bzw. der tatsächlich vorhandenen Person nicht entsprechen. Die Annahme bezüglich der Größe einer Person kann beispielsweise dann nicht zutreffen, wenn die Person keine stehende Körperhaltung aufweist.

Aus der CN 111 561 906 A ist ein System mit den Merkmalen gemäß dem Oberbegriff des Anspruchs 1 bekannt.

Die US 2017/0031369 A1 beschreibt ein System mit Merkmalen gemäß einer ähnlichen Technologie.

In der CN 106 127 163 A ist ein System zum Ermitteln des Abstands eines Objekts bezüglich einer Referenzposition beschrieben. Das System umfasst einen optischen Sensor, der sich an der Referenzposition befindet. In einem von dem Sensor erfasstes Bild werden vorbestimmte Identifikationsmerkmale eines Objekts nachgewiesen. Ferner werden vorbestimmte geometrische Daten des Objekts empfangen, um anhand dieser Daten den Abstand des Objekts zu ermitteln. Wenn der Abstand zwischen dem Sensor und einer erfassten Zielperson einen Schwellenwert unterschreitet und die Zielperson einem bestimmten Ort nicht zugeordnet ist, gibt das System eine Fehlermeldung aus.

Eine Aufgabe der Erfindung besteht darin, ein System zu schaffen, das bei geringen Anforderungen bezüglich des verwendeten Sensors eine zuverlässige Ermittlung des Abstands eines Objekts bezogen auf eine Referenzposition ermöglicht.

Diese Aufgabe wird durch ein System mit den Merkmalen des Anspruchs 1 gelöst. Vorteilhafte Weiterbildungen der Erfindung sind in den Unteransprüchen, der Beschreibung und den Zeichnungen angegeben.

Das System ist zum Ermitteln des Abstands eines Objekts bezüglich einer Referenzposition vorgesehen und umfasst einen optischen Sensor, der an der Referenzposition angeordnet ist und ein vordefiniertes Sichtfeld aufweist, sowie eine elektronische Verarbeitungseinheit. Die elektronische Verarbeitungseinheit ist ausgebildet, um ein von dem optischen Sensor erfasstes Bild sowie vorbestimmte Identifikationsmerkmale und vorbestimmte geometrische Daten des Objekts zu empfangen. Ferner ist die elektronische Verarbeitungseinheit ausgebildet, um das Objekt anhand der vorbestimmten Identifikationsmerkmale in dem Sichtfeld des optischen Sensors nachzuweisen, zumindest zwei Schlüsselpositionen des Objekts in dem Bild zu identifizieren und den Abstand der Schlüsselpositionen in dem Bild zu ermitteln. Den Abstand des Objekts bezüglich der Referenzposition ermittelt die elektronische Verarbeitungseinheit anhand des Abstands der Schlüsselpositionen in dem Bild und anhand der vorbestimmten geometrischen Daten des Objekts.

Der optische Sensor muss lediglich in der Lage sein, ein zweidimensionales Bild seiner Umgebung zu erfassen, damit anhand dieses Bildes der Abstand zwischen den Schlüsselpositionen des Objekts und schließlich der Abstand zwischen dem Objekt und der Referenzposition ermittelt werden kann, wenn die Identifikationsmerkmale und die geometrischen Daten des Objekts verfügbar sind. Folglich bestehen geringe Anforderungen bezüglich der technischen Merkmale des optischen Sensors.

Eine Voraussetzung für die Abstandsermittlung mittels des Systems besteht darin, dass gewisse Eigenschaften des Objekts, d.h. die Identifikationsmerkmale und die geometrischen Daten, vorab bekannt sind. Der ermittelte Abstand zwischen den Schlüsselpositionen wird zusammen mit den Vorab-Informationen bezüglich des Objekts verwendet, um den Abstand des Objekts bezüglich der Referenzposition zu ermitteln, wobei beispielsweise bekannte Eigenschaften des optischen Sensors wie etwa dessen Abbildungsverhalten verwendet werden können.

Die vorbestimmten Identifikationsmerkmale können beispielsweise das Gesicht einer Person, das als Kamerabild vorab erfasst wird, charakteristische Maße oder Formen eines Objekts oder ein Radiofrequenz-Identifikationsetikett (RFID-Tag) umfassen. Ferner können die Identifikationsmerkmale auch spezielle Posen oder Bewegungsabläufe einer Person umfassen, die zuvor mittels einer Kamera erfasst werden und in der Form eines Kamerabildes oder einer Bildsequenz bereitgestellt werden. Somit lässt sich das Objekt mittels der Identifikationsmerkmale nicht nur bezüglich des Objekttyps klassifizieren, sondern z.B. auch bezüglich der Körperhaltung von Personen. Beispielsweise kann eine Person im Stehen andere Identifikationsmerkmale aufweisen als im Sitzen.

Die vorbestimmten Objektdaten beziehen sich hingegen auf Abmessungen des Objekts. Die vorbestimmten Objektdaten können auch Abmessungen zwischen bestimmten Merkmalen einer Person umfassen, die von der Körperhaltung der Person abhängen, beispielsweise den Abstand zwischen einer Schulter und einem Knie der Person. Wenn das Identifikationsmerkmal entsprechend ausgestaltet ist (z.B als RFID-Tag) und ein entsprechendes Lesegerät zum Einsatz kommt, können die Objektdaten auch darin gespeichert sein und bei der Identifikation verwendet werden.

Die zumindest zwei Schlüsselpositionen des Objekts können die jeweilige Abbildung charakteristischer, leicht erkennbarer Punkte an dem Objekt umfassen, die beispielsweise mittels bekannter Algorithmen zur Muster- und/oder Objekterkennung nachweisbar sind. Objektpositionen, die im "Objektraum" an dem Objekt vorgegeben sind, werden folglich mittels der optischen Abbildung den jeweiligen Schlüsselpositionen in dem Bild zugeordnet, die sich somit im "Bildraum" befinden. Bei Personen können die vorgegebenen Objektpositionen beispielsweise die Positionen von Gelenken umfassen, wie etwa die Positionen einer Schulter und eines Knies.

Der Abstand der Schlüsselpositionen in dem Bild kann daher auch als Abstand im Bildraum bezeichnet werden, der beispielsweise derart ermittelt werden kann, dass die Anzahl von Pixeln in dem Bild gezählt wird, die sich entlang einer geraden Linie zwischen den Schlüsselpositionen befinden. Bei bekannter Pixelgröße kann der Abstand der Schlüsselpositionen in dem Bild somit anhand der Anzahl der Pixel zwischen den Schlüsselpositionen ermittelt werden.

Anhand der vorbestimmten geometrischen Daten des Objekts kann ferner der tatsächliche Abstand zwischen zumindest zwei vorgegebenen Objektpositionen ermittelt werden, der auch als Abstand im Objektraum bezeichnet werden kann. Bei bekannten Abbildungseigenschaften des optischen Sensors kann schließlich der Abstand zwischen dem Objekt und der Referenzposition ermittelt werden, indem der Abstand der Schlüsselpositionen in dem Bild, d.h. im Bildraum, mit dem tatsächlichen Abstand der vorgegebenen Objektpositionen im Objektraum in Beziehung gesetzt wird.

Ein Vorteil des erfindungsgemäßen Systems besteht darin, dass ein einfacher, kostengünstiger optischer Sensor verwendet werden kann. Im Vergleich zu teuren 3D-Sensoren wie etwa Sensoren zur Laufzeitmessung oder Stereokameras kann ein solcher einfacher Sensor eine hohe Auflösung aufweisen, beispielsweise in lateraler Richtung. Dadurch kann der Sensor nicht nur zur Abstandsmessung, sondern für weitere Aufgaben im Bereich der Bildanalyse oder z.B. zur Implementierung einer Gestensteuerung verwendet werden.

Anhand der Vorab-Information bezüglich des Objekts, dessen Abstand bezogen auf die Referenzposition ermittelt werden soll, kann die Zuverlässigkeit der Abstandsermittlung beispielsweise im Vergleich zu solchen Ansätzen verbessert werden, die auf festen Annahmen beispielsweise bezüglich der Größe von Personen beruhen. Darüber hinaus gestattet das System die dynamische Nachverfolgung eines erkannten bzw. klassifizierten Objekts innerhalb des Sichtfelds des optischen Sensors.

Die elektronische Verarbeitungseinheit ist ferner ausgebildet, eine Fehlermeldung auszugeben, wenn das Objekt nicht anhand der vorbestimmten Identifikationsmerkmale in dem Sichtfeld des optischen Sensors nachweisbar ist und/oder wenn die Schlüsselpositionen des Objekts nicht in dem Bild identifizierbar sind. In einem industriellen Umfeld kann eine solche Fehlermeldung beispielsweise verwendet werden, um die Bewegung von Objekten in einem solchen Umfeld zu unterdrücken, die möglicherweise mit einer Gefahr verbunden ist.

Für den Fall, dass zwar ein Objekt in dem Bild erkennbar ist, das Objekt und/oder die Schlüsselpositionen des Objekts jedoch in dem Bild nicht eindeutig identifizierbar sind, ist die elektronische Verarbeitungseinheit zusätzlich dazu ausgestaltet, zwei ausgewählten Punkten in dem Bild einen vordefinierten Abstand zuzuordnen, der den Abstand der vorgegebenen Objektpositionen , d.h. im Objektraum, bei der Ermittlung des Abstands zwischen dem Objekt und der Referenzposition ersetzt. Der vordefinierte Abstand kann als Standardwert in dem System vorgegeben sein und beispielsweise eine Standardgröße für Personen umfassen. In diesem Fall wird folglich der genau ermittelte Abstand zwischen den Objektpositionen, der in den geometrischen Daten enthalten ist und normalerweise den Schlüsselpositionen zugeordnet wird, durch einen Standardwert ersetzt. Dadurch wird zwar die Genauigkeit des Systems eingeschränkt, eine Abstandsermittlung ist jedoch auch bei nicht identifizierbaren Schlüsselpositionen möglich.

Die elektronische Verarbeitungseinheit kann ferner ausgebildet sein, um den Abstand des Objekts bezüglich der Referenzposition zusätzlich anhand von Parametern des optischen Sensors zu ermitteln. Die Parameter des optischen Sensors können sich auf dessen Abbildungseigenschaften beziehen. Die genaue Kenntnis der Parameter des optischen Sensors kann die Zuverlässigkeit des Systems bei der Abstandsermittlung bezüglich der Referenzposition erhöhen.

Der optische Sensor kann eine monokulare Kamera umfassen. Die monokulare Kamera ist ein kostengünstiger optischer Sensor, der eine hohe laterale Auflösung aufweist. Die monokulare Kamera kann darüber hinaus eine Überwachungskamera sein, die ohnehin in einem gewünschten Bereich, beispielsweise innerhalb einer Industrieanlage, installiert ist. Dies verringert zusätzlich die Kosten des Systems, da es in einem solchen Fall lediglich erforderlich ist, die Verarbeitungseinheit zur Ermittlung des Abstands des Objekts zusätzlich zu implementieren.

Wenn der optische Sensor eine monokulare Kamera ist, kann die elektronische Verarbeitungseinheit ferner ausgebildet sein, um den Abstand des Objekts bezüglich der Referenzposition zusätzlich anhand von Daten bezüglich der Abbildungseigenschaften der monokularen Kamera zu ermitteln. In diesem Fall kann beispielsweise die momentane Brennweite der monokularen Kamera berücksichtigt werden, um den Abstand des Objekts bezüglich der Referenzposition zu ermitteln, wenn der Abstand der Schlüsselpositionen im Bildraum ermittelt ist und der Abstand der vorgegebenen Objektpositionen im Objektraum bekannt ist.

Es können auch gesonderte Markierungen an dem Objekt angebracht sein, welche die vorgegebenen Objektpositionen festlegen und den Schlüsselpositionen zugeordnet sind. Entsprechend können die geometrischen Daten einen jeweiligen Abstand zwischen jeweils zwei der vordefinierten Markierungen umfassen. Die vordefinierten Markierungen können z. B. an der Kleidung einer Person oder an der Außenfläche eines Gegenstands angebracht sein und beispielsweise geeignete reflektierende Flächen oder Leuchten wie etwa LEDs umfassen. Die Markierungen können dann im Bild als Schlüsselpositionen identifiziert werden. Solche vordefinierten Markierungen können die Identifikation und die Ermittlung des jeweiligen Abstands erleichtern und die Zuverlässigkeit des Systems verbessern.

Die elektronische Verarbeitungseinheit kann ferner ausgebildet sein, um die vorbestimmten Identifikationsmerkmale in dem Bild zu erkennen, das von dem optischen Sensor erfasst wird. Dadurch kann das Objekt in dem Sichtfeld des optischen Sensors nachgewiesen werden. Dieser Nachweis kann beispielsweise dadurch erfolgen, dass das Gesicht einer Person oder deren spezifische Posen bzw. Bewegungsabläufe erkannt werden. Das von dem optischen Sensor erfasste Bild dient folglich einerseits dazu, das Vorhandensein des Objekts anhand der Identifikationsmerkmale nachzuweisen, und andererseits dazu, den Abstand der Schlüsselpositionen im Bildraum zu ermitteln.

Alternativ oder zusätzlich können die vorbestimmten Identifikationsmerkmale zumindest ein Radiofrequenz-Identifikationsetikett (RFID Tag, Radio Frequency Identification) umfassen. Die Verwendung eines solchen Radiofrequenz-Identifikationsetiketts kann entweder die Zuverlässigkeit bei dem Nachweis des Objekts im Sichtfeld des optischen Sensors erhöhen oder den Nachweis des Objekts mittels des von dem optischen Sensor erfassten Bildes ersetzen. In letzterem Fall ist keine Muster- oder Objekterkennung erforderlich, die auf das von dem optischen Sensor erfasste Bild angewendet wird. Dies vereinfacht die Anwendung des Systems.

Die geometrischen Daten des Objekts können vorab anhand eines CAD-Modells des Objekts und/oder unter Verwendung zumindest eines 3D-Scanners ermittelt sein. Die Verwendung eines CAD-Modells und/oder des 3D-Scanners kann genaue geometrische Daten des Objekts bereitstellen, das im Sichtfeld des optischen Sensors erkannt werden und dessen Abstand bezüglich der Referenzposition ermittelt werden soll. Durch genaue geometrische Daten lässt sich die Zuverlässigkeit des Systems verbessern, da der ermittelte Abstand des Objekts von den geometrischen Daten abhängt.

Die elektronische Verarbeitungseinheit kann ferner zusätzlich dazu ausgebildet sein, um den optischen Sensor anhand eines vordefinierten Abstands zwischen Kontrollpositionen zu überwachen, die an einem oder mehreren feststehenden Objekten angeordnet sind. Durch eine solche Überwachung wird die Zuverlässigkeit des Systems weiter verbessert. Bei der Verwendung einer kostengünstigen monokularen Kamera kann ferner ein sogenannter Temperaturgang auftreten, d.h. die Veränderung der Abbildungseigenschaften mit der Temperatur. In diesem Fall ermöglicht die Überwachung der Kamera mittels der vordefinierten Abstände zwischen feststehenden Kontrollpositionen, die Kamera anhand des vordefinierten Abstands erneut zu kalibrieren.

Ferner kann die elektronische Verarbeitungseinheit ausgebildet sein, um zusätzlich eine räumliche Lage des Objekts anhand einer Umwandlung des Abstands des Objektes bezüglich der Referenzposition unter Verwendung bekannter Abbildungseigenschaften des optischen Sensors zu ermitteln. Diese Umwandlung wird auch als "Depth-Map-to-Point-Cloud-Verfahren" bezeichnet und kann durch folgende Formel ausgedrückt werden:

$$(x, y, z, 1) = D(u, v) * inv(K) * (u, v, 1),$$

wobei u, v die Koordinaten eines jeweiligen Pixels in dem von dem optischen Sensor erfassten Bild sind und K eine intrinsische Kameramatrix ist, welche die Abbildungseigenschaften des optischen Sensors beschreibt. "inv" bezeichnet die Inverse der intrinsischen Kameramatrix K, während D(u,v) einen "depth map value", d.h. einen Wert einer Tiefenkarte, an dem jeweiligen Pixel mit den Koordinaten u, v bezeichnet. x, y und z sind die drei kartesischen Koordinaten im Objektraum, die dem jeweiligen Pixel im Bildraum zugeordnet sind.

Außerdem kann die dreidimensionale Position des Objekts beispielsweise mittels einer Triangulation ermittelt werden, wenn der jeweilige Abstand einer oder mehrerer Positionen an dem Objekt bezogen auf zumindest zwei Referenzpositionen bekannt ist. Dies erfordert jedoch die Verwendung zumindest zweier optischer Sensoren, die sich an der jeweiligen Referenzposition befinden.

Die dreidimensionale Position bzw. räumliche Lage des Objekts kann durch die dreidimensionalen Koordinaten des Objekts bezüglich eines Koordinatensystems beschrieben werden, dessen Ursprung sich an der Referenzposition befindet. Die räumliche Lage des Objekts stellt eine zusätzliche Information dar, d.h. zusätzlich zum Abstand des Objekts bezüglich der Referenzposition. Die Information bezüglich der räumlichen Lage kann für weitere Systeme und Anwendungen im Umfeld des optischen Sensors relevant sein.

Wenn darüber hinaus die jeweilige räumliche Lage zumindest zweier Objekte im Sichtfeld des Sensors mittels des Systems ermittelt wird, kann außerdem der Abstand zwischen den zumindest zwei Objekten ermittelt und nachverfolgt werden. Wenn der Abstand zwischen den zumindest zwei Objekten einen vorbestimmten Schwellenwert unterschreitet, können Gegenmaßnahmen zur Vermeidung einer Kollision der Objekte eingeleitet werden, beispielsweise durch Verringerung der jeweiligen Geschwindigkeit der Objekte. Zusätzlich kann eine Fehlermeldung ausgegeben werden, wenn der Abstand zwischen den zumindest zwei Objekten den vorbestimmten Schwellenwert unterschreitet.

Nachfolgend wird die Erfindung beispielhaft anhand einer vorteilhaften Ausführungsform unter Bezugnahme auf die beigefügten Figuren beschrieben. Es zeigen, jeweils schematisch:

Fig. 1    ein System zum Ermitteln des Abstands eines Objekts und

Fig. 2    Details einer elektronischen Verarbeitungseinheit des Systems von Fig. 1.

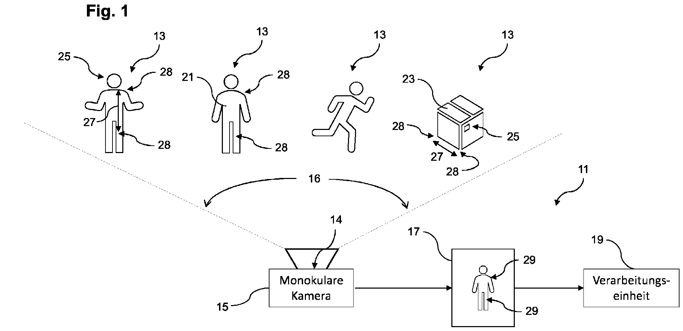

Fig. 1 zeigt schematisch ein System 11 zum Ermitteln des Abstands eines oder mehrerer Objekte 13 bezogen auf eine Referenzposition 14. Das System 11 umfasst einen optischen Sensor 15, der als monokulare Kamera ausgebildet ist und an der Referenzposition 14 angeordnet ist. Genauer gesagt befindet sich die Referenzposition 14 in der Abbildungsebene der Kamera 15. Die monokulare Kamera 15 weist ein Sichtfeld 16 auf und gibt ein zweidimensionales Bild 17 des bzw. der Objekte 13 aus. Das System 11 umfasst ferner eine elektronische Verarbeitungseinheit 19, die ausgebildet ist, um das von der Kamera 15 erfasste Bild 17 zu empfangen und zur Ermittlung des Abstands zwischen dem bzw. den Objekten 13 und der Referenzposition 14 zu verarbeiten.

Die Objekte 13, die in dem Bild 17 von der Kamera 15 erfasst werden, umfassen Personen 21 und/oder Gegenstände 23. Die jeweilige Person 21 und der jeweilige Gegenstand 23 weisen jeweils vorbestimmte Identifikationsmerkmale 25 auf, die es ermöglichen, das Vorhandensein der Person 21 und/oder des Gegenstands 23 in dem Sichtfeld 16 der Kamera 15 nachzuweisen.

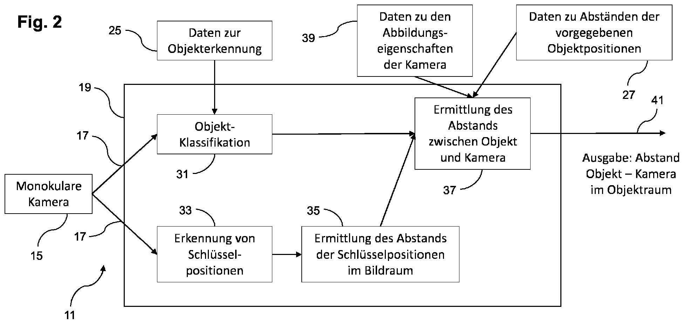

Die Identifikationsmerkmale 25 umfassen bei Personen 21 beispielsweise ein Kamerabild des Gesichts der Person 21, das vorab von einem anderen System erfasst wurde und für das System 11 bereitgestellt wird. Die Identifikationsmerkmale 25 umfassen alternativ oder zusätzlich ein Radiofrequenz-Identifikationsetikett (RFID Tag) der jeweiligen Person 21 oder des jeweiligen Gegenstands 23. Durch die Erfassung von Daten des Radiofrequenz-Identifikationsetiketts lässt sich ebenfalls das Vorhandensein des jeweiligen Objekts 13 in dem Sichtfeld 16 der Kamera 15 nachweisen. Darüber hinaus können die Identifikationsmerkmale 25 auch auf der Grundlage von CAD-Modelldaten generiert sein, die eine eindeutige Identifikation des jeweiligen Objekts 13 anhand von Abständen oder Formen gestatten, die durch die CAD-Modelldaten definiert sind. Insgesamt werden die Identifikationsmerkmale 25 als Daten zur Objekterkennung für das System 11 bereitgestellt (vgl. auch Fig. 2).

Ferner sind dem jeweiligen Objekt 13 geometrische Daten 27 zugeordnet, die den Abstand zwischen zumindest zwei vorgegebenen Objektpositionen 28 des jeweiligen Objekts 13 umfassen. Bei einer Person 21 umfassen diese vorgegebenen Objektpositionen 28 beispielsweise die Position einer Schulter und eines Knies, so dass die geometrischen Daten 27 den Abstand zwischen der Schulter und dem Knie der jeweiligen Person 21 umfassen. Bei einem Gegenstand 23 befinden sich die vorgegebenen Objektpositionen 28 beispielsweise an Ecken oder Kanten des Gegenstands 23, so dass die geometrischen Daten 27 beispielsweise eine Seiten- oder Kantenlänge des Gegenstands 23 umfassen.

Mittels der optischen Abbildung durch die Kamera 15 sind den vorgegebenen Objektpositionen 28, die sich im "Objektraum" befinden, jeweilige Schlüsselpositionen 29 in dem Bild 17 zugeordnet, die sich somit im "Bildraum" befinden. Die vorgegebenen Objektpositionen 28 können auch durch vordefinierte Markierungen (nicht dargestellt) an dem jeweiligen Objekt 13 definiert sein, welche somit die Schlüsselpositionen 29 in dem Bild festlegen. Wenn solche Markierungen an der Kleidung der Person 21 oder an der Außenfläche des Gegenstands 23 geeignet angebracht sind, sind die Markierungen als vorgegebene Objektpositionen 28 in dem Bild 17 leicht erkennbar. Die Markierungen können beispielsweise farbliche Markierungen, reflektierende Flächen oder Leuchten sein. Ferner lassen sich die Abstände solcher Markierungen leicht ermitteln und als Teil der geometrischen Daten 27 erfassen.

Die geometrischen Daten 27 werden vorab durch andere Systeme erzeugt und für das System 11 bereitgestellt. Bei Personen 21 und Gegenständen 23 können beispielsweise 3D-Scanner verwendet werden, um einen jeweiligen Satz geometrischer Daten für das jeweilige Objekt 13 zu erzeugen, d.h. für die jeweilige Person 21 und den jeweiligen Gegenstand 23. Ferner können die geometrischen Daten 27 bei Gegenständen 23 wiederum auch auf der Grundlage von CAD-Modelldaten generiert werden.

Fig. 2 zeigt schematisch Details bezüglich der Ausgestaltung der elektronischen Verarbeitungseinheit 19 und bezüglich der Informationen, welche die elektronische Verarbeitungseinheit 19 zur Ermittlung des Abstands zwischen dem jeweiligen Objekt 13 und der Kamera 15 bzw. der Referenzposition 14 verwendet. Die elektronische Verarbeitungseinheit 19 umfasst mehrere Module 31 bis 37, die jeweils als Softwaremodule und/oder als logische Schaltungen realisiert sind. Im Einzelnen umfassen diese Module der elektronischen Verarbeitungseinheit 19 ein Modul 31 zur Objektklassifikation, ein Modul 33 zur Erkennung von Schlüsselpositionen 29, ein Modul 35 zur Ermittlung des Abstands der Schlüsselpositionen 29 im Bildraum und ein Modul 37 zur Ermittlung des Abstands zwischen dem jeweiligen Objekt 13 und der Kamera 15 bzw. der Referenzposition 14.

Sowohl das Modul 31 zur Objektklassifikation als auch das Modul 33 zur Erkennung von Schlüsselpositionen empfangen jeweils das zweidimensionale Bild 17, das von der monokularen Kamera 15 erfasst wird. Das Modul 31 zur Objektklassifikation empfängt zusätzlich die Identifikationsmerkmale 25 der jeweiligen Objekte 13 als Daten zur Objekterkennung. Das Modul 31 zur Objektklassifikation ermittelt anhand der Identifikationsmerkmale bzw. Daten zur Objekterkennung 25, ob ein jeweiliges Objekt 13 in dem Sichtfeld 16 der Kamera 15 vorhanden ist.

Zu diesem Zweck vergleicht das Modul 31 zur Objektklassifikation beispielsweise ein Kamerabild des Gesichts einer bestimmten Person 21 mit dem zweidimensionalen Bild 17, um das Gesicht der Person 21 in dem Bild 17 zu identifizieren. Alternativ oder zusätzlich erfolgt die Identifikation und Klassifikation einer bestimmten Person 21 anhand von Daten z.B. eines Radiofrequenz-Identifikationsetiketts, die als Daten zur Objekterkennung 25 von dem Modul 31 zur Objektklassifikation empfangen werden. Bei Gegenständen 23 umfassen die Daten zur Objekterkennung bzw. Identifikationsmerkmale 25 vordefinierte Formen und/oder Angaben zu Abmessungen, beispielsweise das Verhältnis von Länge zu Breite.

Bei Personen identifiziert das Modul 31 zur Objektklassifikation nicht nur das Vorhandensein der jeweiligen, bekannten Person 21 in dem Sichtfeld 16 der Kamera 15, sondern es unterscheidet auch zwischen unterschiedlichen Posen oder Körperhaltungen der jeweiligen Person 21. Beispielsweise identifiziert das Modul 31 zur Objektklassifikation, ob die jeweilige Person 21 steht oder sitzt. In diesem Fall umfasst die Objektklassifikation mittels des Moduls 31 beispielsweise die Klassen "sitzende Person A" und "stehende Person A", d.h. zwei unterschiedliche Klassen für eine bestimmte Person A, die anhand eines Kamerabildes ihres Gesichts identifiziert wurde. Jeder Klasse eines Objekts 13 ist ferner ein Satz geometrischer Daten 27 zugeordnet, der einen oder mehrere Abstände zwischen den vorgegebenen Objektpositionen 28 des jeweiligen Objekts 13 umfasst. In Fig. 1 sind ferner drei verschiedene Posen bzw. Körperhaltungen der Person 21 dargestellt, denen wiederum drei verschiedene Objektklassen entsprechen können.

Das Modul 33 zur Erkennung von Schlüsselpositionen ermittelt, ob zumindest zwei vordefinierte Schlüsselpositionen 29 des jeweiligen Objekts 13 in dem Bild 17 erkennbar sind. Die Schlüsselpositionen 29 sind beispielsweise bei einer Person 21 die jeweilige Abbildung der Position einer Schulter und der Position eines Knies. Das Modul 33 zur Erkennung von Schlüsselpositionen stellt somit beispielsweise fest, ob eine Schulter und ein Knie einer Person 21 als Schlüsselpositionen 29 in dem Bild 17 erkennbar sind, wie dies in dem Bild 17 von Fig. 1 dargestellt ist, das von der Kamera 15 ausgegeben wird.

Das Modul 33 zur Erkennung von Schlüsselpositionen gibt dann, wenn die Schlüsselpositionen 29 in dem Bild 17 erkennbar sind, Informationen bezüglich der Schlüsselpositionen 29 an das Modul 35 zur Ermittlung des Abstands der Schlüsselpositionen 29 weiter. Im Detail umfasst diese Information, bei welchen Pixeln innerhalb des zweidimensionalen Bildes 17 die jeweilige Schlüsselposition 29 angeordnet ist. Anhand dieser Information ermittelt das Modul 35 den Abstand zwischen jeweils zwei Schlüsselpositionen 29 innerhalb des Bildes 17, d.h. im Bildraum. Zu diesem Zweck zählt das Modul 35 die Anzahl der Pixel entlang einer geraden Linie zwischen den jeweils zwei Schlüsselpositionen 29. Bei bekannter Pixelgröße im Bild 17 legt die Anzahl der Pixel zwischen den Schlüsselpositionen 29 deren Abstand im Bildraum fest, d.h. innerhalb des Bildes 17.

Das Modul 37 zur Ermittlung des Abstands zwischen Objekt 13 und Kamera 15 bzw. Referenzposition 14 empfängt sowohl die Klassifikation des jeweiligen Objekts 13 von dem Modul 31 zur Objektklassifikation als auch einen oder mehrere Abstände zwischen jeweils zwei Schlüsselpositionen 29 im Bildraum von dem Modul 35. Zusätzlich empfängt das Modul 37 Daten 39 zu den Abbildungseigenschaften der Kamera 15 und die geometrischen Daten 27, die vorab ermittelt wurden und dem jeweiligen klassifizierten Objekt 13 zugeordnet sind. Die geometrischen Daten 27 umfassen jeweilige Abstände zwischen den vorgegebenen Objektpositionen 28 im Objektraum, d.h. deren tatsächlichen Abstände, die vorab mittels eines anderen Systems ermittelt wurden.

Anhand des Abstands zweier Schlüsselpositionen 29 im Bildraum, d.h. innerhalb des Bildes 17 (vgl. Fig. 1), anhand des Abstands der vorgegebenen Objektpositionen 28 im Objektraum, die diesen Schlüsselpositionen 29 zugeordnet sind, und anhand der Daten 39 zu den Abbildungseigenschaften der Kamera ermittelt das Modul 37 den Abstand zwischen dem identifizierten Objekt 13 und der Kamera 15. Mit anderen Worten verwendet das Modul 37 die Beziehung zwischen dem Abstand der Schlüsselpositionen 29 im Bildraum und dem Abstand der vorgegebenen Objektpositionen 28 im Objektraum, die durch die bekannten Abbildungseigenschaften der Kamera 15 bestimmt ist, die beispielsweise deren Brennweite umfassen, um den Abstand zwischen dem identifizierten Objekt 13 und der Kamera 15 bzw. der Referenzposition 14, an der sich die Kamera befindet, zu ermitteln. Eine Ausgabe 41 der elektronischen Verarbeitungseinheit 19 umfasst den Abstand zwischen dem identifizierten Objekt 13 und der Kamera 15 im Objektraum, der mittels des Moduls 37 ermittelt wurde.

Wenn das Modul 31 zur Objektklassifikation keines der Objekte 13 identifizieren bzw. klassifizieren kann, gibt die elektronische Verarbeitungseinheit 19 eine Fehlermeldung als Ausgabe 41 aus. Eine solche Fehlermeldung kann von weiteren Systemen, die mit dem System 11 kommunikativ verbunden sind, beispielsweise in einem industriellen Umfeld verwendet werden, um Gefahr bringende Bewegungen von Objekten und Gegenständen in der Umgebung des Systems 11 zu unterdrücken.

Wenn das Modul 31 zur Objektklassifikation hingegen zwar ein bestimmtes Objekt 13 klassifiziert bzw. identifiziert und das Modul 33 zur Erkennung von Schlüsselpositionen jedoch keine der vorbestimmten Schlüsselpositionen 29 des identifizierten Objekts 13 erkennt, kann das Modul 37 zur Ermittlung des Abstands zwischen dem Objekt 13 und der Kamera 15 anstelle des Abstands zwischen den Objektpositionen 28 im Objektraum einen vordefinierten Abstand verwenden, der in den geometrischen Daten 27 enthalten ist, beispielsweise die Größe einer Person 21, und das entsprechende Gegenstück dieses Abstands in dem Bild 17 schätzen, um dadurch den Abstand zwischen dem Objekt 13 und der Kamera 15 zu ermitteln.

Insgesamt verwendet das System 11 somit Vorab-Informationen von Objekten 13, d.h. die Identifikationsmerkmale 25 und die geometrischen Daten 27, die mittels anderer Systeme bereitgestellt werden, und das Bild 17, das mittels der monokularen Kamera 15 erfasst wird, um den Abstand zwischen dem jeweiligen Objekt 13 und der Kamera 15 bzw. der Referenzposition 14 bei bekannten Abbildungseigenschaften der monokularen Kamera 15 zu ermitteln. Da lediglich ein zweidimensionales Bild 17 als Eingabe für die Verarbeitungseinheit 19 erforderlich ist, bestehen geringe Anforderungen an die monokulare Kamera 15, so dass diese als einfache Überwachungskamera ausgebildet sein kann, die häufig ohnehin in einer bestimmten industriellen Infrastruktur vorhanden ist.

Um die Zuverlässigkeit des Systems 11 zu verbessern, ist vorgesehen, dass die elektronische Verarbeitungseinheit 19 die monokulare Kamera 15 anhand eines vordefinierten Abstands zwischen Kontrollpositionen (nicht dargestellt) überwacht. Die Kontrollpositionen sind an einem oder mehreren feststehenden Objekten angeordnet. Bei der Verwendung einer kostengünstigen monokularen Kamera 15 tritt möglicherweise ein sogenannter Temperaturgang auf, d.h. die Veränderung der Abbildungseigenschaften mit der Temperatur. In diesem Fall ermöglicht die Überwachung der monokularen Kamera 15 mittels der vordefinierten Abstände zwischen feststehenden Kontrollpositionen, die monokulare Kamera 15 anhand der vordefinierten Abstände erneut zu kalibrieren.

Die elektronische Verarbeitungseinheit 19 ist ferner dafür vorgesehen, eine räumliche Lage des Objekts 13 anhand der Abstände zumindest zweier vorbestimmter Positionen bezüglich der Referenzposition 14 zu ermitteln. Im Einzelnen wird die dreidimensionale Position des Objekts 13 mittels einer Triangulation ermittelt, wenn zumindest zwei Abstände vorbestimmter Positionen an dem Objekt 13 bekannt sind. Dadurch können dreidimensionale Koordinaten des Objekts 13 bezüglich eines Koordinatensystems ermittelt werden, dessen Ursprung sich an der Referenzposition 14 befindet. Die so bestimmte räumliche Lage des Objekts 13 stellt eine zusätzliche Information dar, d.h. zusätzlich zum Abstand des Objekts 13 bezüglich der Referenzposition. Die Information bezüglich der räumlichen Lage kann für weitere Systeme und Anwendungen im Umfeld der monokularen Kamera 15 relevant sein.

Wenn darüber hinaus die jeweilige räumliche Lage zumindest zweier Objekte 13 im Sichtfeld der Kamera 15 mittels des Systems 11 ermittelt werden kann, lässt sich außerdem der Abstand zwischen den zumindest zwei Objekten 13 ermitteln und nachverfolgen. Wenn der Abstand zwischen den zumindest zwei Objekten 13 ferner einen vorbestimmten Schwellenwert unterschreitet, können Gegenmaßnahmen zur Vermeidung einer Kollision der Objekte 13 eingeleitet werden, beispielsweise durch Verringerung der jeweiligen Geschwindigkeit der Objekte 13. Zusätzlich kann eine Fehlermeldung ausgegeben werden, wenn der Abstand zwischen den zumindest zwei Objekten 13 den vorbestimmten Schwellenwert unterschreitet.

Bezugszeichenliste

| 11 | System zum Ermitteln des Abstands eines Objekts |
| 13 | Objekt |
| 14 | Referenzposition |
| 15 | optischer Sensor, monokulare Kamera |
| 16 | Sichtfeld |
| 17 | zweidimensionales Bild |
| 19 | elektronische Verarbeitungseinheit |
| 21 | Person |
| 23 | Gegenstand |
| 25 | Identifikationsmerkmal |
| 27 | geometrische Daten |
| 28 | vorgegebene Objektposition |
| 29 | Schlüsselposition |
| 31 | Modul zur Objektklassifikation |
| 33 | Modul zur Erkennung von Schlüsselpositionen |
| 35 | Modul zur Ermittlung des Abstands der Schlüsselpositionen im Bildraum |
| 37 | Modul zur Ermittlung des Abstands zwischen Objekt und Kamera |

39 Daten zu den Abbildungseigenschaften der Kamera

41 Ausgabe der elektronischen Verarbeitungseinheit

**Patentansprüche**

1. System (11) zum Ermitteln des Abstands eines Objekts (13) bezüglich einer Referenzposition (14), umfassend:

einen optischen Sensor (15), der an der Referenzposition (14) angeordnet ist und ein vordefiniertes Sichtfeld (16) aufweist,
eine elektronische Verarbeitungseinheit (19), die ausgebildet ist, um:

ein von dem optischen Sensor (15) erfasstes Bild (17) zu empfangen,
vorbestimmte Identifikationsmerkmale (25) und vorbestimmte geometrische Daten (27) des Objekts (13) zu empfangen,
das Objekt (13) anhand der vorbestimmten Identifikationsmerkmale (25) in dem Sichtfeld (16) des optischen Sensors (15) nachzuweisen,
zumindest zwei Schlüsselpositionen (29) des Objekts (13) in dem Bild (17) zu identifizieren,
den Abstand der Schlüsselpositionen (29) in dem Bild (17) zu ermitteln und
den Abstand des Objekts (13) bezüglich der Referenzposition (14) anhand des Abstands der Schlüsselpositionen (29) in dem Bild (17) und anhand der vorbestimmten geometrischen Daten (27) des Objekts (13) zu ermitteln,

**dadurch gekennzeichnet,**

**dass** die elektronische Verarbeitungseinheit (19) zusätzlich dazu ausgebildet ist, eine Fehlermeldung auszugeben, wenn das Objekt (13) nicht anhand der vorbestimmten Identifikationsmerkmale (25) in dem Sichtfeld des optischen Sensors (15) nachweisbar ist und/oder wenn die Schlüsselpositionen (29) des Objekts (13) nicht in dem Bild (17) identifizierbar sind, und
**dass** die elektronische Verarbeitungseinheit (19) zusätzlich dazu ausgebildet ist, dann, wenn zwar ein Objekt (19) in dem Bild (17) erkennbar ist, das Objekt (19) und/oder die Schlüsselpositionen (29) des Objekts (13) jedoch in dem Bild (17) nicht eindeutig identifizierbar sind, zwei ausgewählten Punkten in dem Bild (17) einen vordefinierten Abstand zuzuordnen, der einen Abstand von vorgegebenen Objektpositionen, der in den geometrischen Daten (27) für eine Zuordnung zu dem Abstand der Schlüsselpositionen (29) enthalten ist, bei der Ermittlung des Abstands zwischen dem Objekt (13) und der Referenzposition (14) ersetzt.

2. System (11) nach Anspruch 1,
**dadurch gekennzeichnet,**
**dass** die elektronische Verarbeitungseinheit (19) ferner ausgebildet ist, bei der Ermittlung des Abstands des Objekts (13) bezüglich der Referenzposition zusätzlich Parameter des optischen Sensors (15) zu berücksichtigen.

3. System (11) nach Anspruch 1 oder 2,
**dadurch gekennzeichnet,**
**dass** der optische Sensor (15) eine monokulare Kamera umfasst.

4. System (11) nach Anspruch 3,
**dadurch gekennzeichnet,**
**dass** die elektronische Verarbeitungseinheit (19) ferner ausgebildet ist, um bei der Ermittlung des Abstands des Objekts (13) bezüglich der Referenzposition (14) Daten bezüglich der Abbildungseigenschaften der monokularen Kamera (15) zu berücksichtigen.

5. System (11) nach einem der vorstehenden Ansprüche,
**dadurch gekennzeichnet,**
**dass** zumindest zwei vordefinierte Markierungen an dem Objekt (13) angebracht sind, die den zumindest zwei Schlüsselpositionen (29) zugeordnet sind, und die geometrischen Daten (27) einen jeweiligen Abstand zwischen jeweils zwei der vordefinierten Markierungen umfassen.

6. System (11) nach einem der vorstehenden Ansprüche,
**dadurch gekennzeichnet,**
**dass** die elektronische Verarbeitungseinheit (19) ferner ausgebildet ist, um die vorbestimmten Identifikationsmerkmale (25) in dem von dem optischen Sensor (15) erfassten Bild (17) zu erkennen, um das Objekt (13) in dem Sichtfeld des optischen Sensors (15) nachzuweisen.

7. System (11) nach einem der vorstehenden Ansprüche,
**dadurch gekennzeichnet,**
**dass** die geometrischen Daten (27) des Objekts (13) vorab anhand eines CAD-Modells des Objekts (13) und/oder unter Verwendung zumindest eines 3D-Scanners festgelegt sind.

8. System (11) nach einem der vorstehenden Ansprüche,
**dadurch gekennzeichnet,**
**dass** die elektronische Verarbeitungseinheit (19) ferner ausgebildet ist, um den optischen Sensor (15) anhand eines vordefinierten Abstands zwischen Kontrollpositionen zu überwachen, die an einem oder mehreren feststehenden Objekten (13) angeordnet sind.

9. System (11) nach einem der vorstehenden Ansprüche,
**dadurch gekennzeichnet,**
**dass** die elektronische Verarbeitungseinheit (19) zusätzlich dazu ausgebildet ist, um eine räumliche Lage des Objekts (13) anhand einer Umwandlung des Abstands des Objektes bezüglich der Referenzposition unter Verwendung bekannter Abbildungseigenschaften des optischen Sensors (15) zu ermitteln.

**Claims**

1. A system (11) for determining the distance of an object (13) with respect to a reference position (14), said system (11) comprising:

   an optical sensor (15) which is arranged at the reference position (14) and which has a predefined field of view (16),
   an electronic processing unit (19) which is configured:

   to receive an image (17) acquired by the optical sensor (15),
   to receive predetermined identification features (25) and predetermined geometric data (27) of the object (13),
   to detect the object (13) in the field of view (16) of the optical sensor (15) based on the predetermined identification features (25),
   to identify at least two key positions (29) of the object (13) in the image (17),
   to determine the distance of the key positions (29) in the image (17), and
   to determine the distance of the object (13) with respect to the reference position (14) based on the distance of the key positions (29) in the image (17) and based on the predetermined geometric data (27) of the object (13),

   **characterized in that**

   the electronic processing unit (19) is additionally configured to output an error message if the object (13) cannot be detected in the field of view of the optical sensor (15) based on the predetermined identification features (25) and/or if the key positions (29) of the object (13) cannot be identified in the image (17), and

   **in that** the electronic processing unit (19) is additionally configured, if an object (19) is indeed recognizable in the image (17), but the object (19) and/or the key positions (29) of the object (13) is/are not clearly identifiable in the image (17), to assign a predefined distance to two selected points in the image (17), said predefined distance replacing a distance of predefined object positions, which is included in the geometric data (27) for an assignment to the distance of the key positions (29), when determining the distance between the object (13) and the reference position (14).

2. A system (11) according to claim 1,
**characterized in that**
the electronic processing unit (19) is further configured to additionally consider parameters of the optical sensor (15) when determining the distance of the object (13) with respect to the reference position.

3. A system (11) according to claim 1 or 2,
**characterized in that**
the optical sensor (15) comprises a monocular camera.

4. A system (11) according to claim 3,
**characterized in that**
the electronic processing unit (19) is further configured to consider data with respect to the imaging properties of the monocular camera (15) when determining the distance of the object (13) with respect to the reference position (14).

5. A system (11) according to any one of the preceding claims,
**characterized in that**
at least two predefined markings, which are assigned to the at least two key positions (29), are applied to the object (13) and the geometric data (27) comprise a respective distance between a respective two of the predefined markings.

6. A system (11) according to any one of the preceding claims,
**characterized in that**
the electronic processing unit (19) is further configured to recognize the predetermined identification features (25) in the image (17) acquired by the optical sensor (15) in order to detect the object (13) in the field of view of the optical sensor (15).

7. A system (11) according to any one of the preceding claims,
**characterized in that**
the geometric data (27) of the object (13) are defined in advance by means of a CAD model of the object (13) and/or using at least one 3D scanner.

**8.** A system (11) according to any one of the preceding claims,
**characterized in that**
the electronic processing unit (19) is further configured to monitor the optical sensor (15) on the basis of a predefined distance between control positions which are arranged at one or more fixed objects (13).

**9.** A system (11) according to any one of the preceding claims,
**characterized in that**
the electronic processing unit (19) is additionally configured to determine a spatial position of the object (13) by means of a conversion of the distance of the object with respect to the reference position using known imaging properties of the optical sensor (15).

**Revendications**

**1.** Système (11) pour déterminer la distance d'un objet (13) par rapport à une position de référence (14), comprenant :

un capteur optique (15) qui est disposé à la position de référence (14) et qui présente un champ de vision prédéfini (16),
une unité de traitement électronique (19) conçue pour

recevoir une image (17) acquise par le capteur optique (15), recevoir des caractéristiques d'identification prédéterminées (25) et des données géométriques prédéterminées (27) de l'objet (13), déceler l'objet (13), à partir des caractéristiques d'identification prédéterminées, dans le champ de vision (16) du capteur optique (15), identifier au moins deux positions clés (29) de l'objet (13) dans l'image (17),
déterminer la distance des positions clés (29) dans l'image (17), et déterminer la distance de l'objet (13) par rapport à la position de référence (14) à partir de la distance des positions clés (29) dans l'image (17) et à partir des données géométriques prédéterminées (27) de l'objet (13),

**caractérisé en ce que**
l'unité de traitement électronique (19) est en outre conçue pour émettre un message d'erreur si l'objet (13) n'est pas décelable, à partir des caractéristiques d'identification prédéterminées (25), dans le champ de vision du capteur optique (15) et/ou si les positions clés (29) de l'objet (13) ne sont pas identifiables dans l'image (17), et l'unité de traitement électronique (19) est en outre conçue pour, si un objet (13) est certes reconnaissable dans l'image (17), mais que l'objet (13) et/ou les positions clés (29) de l'objet (13) ne sont pas univoquement identifiables dans l'image (17), attribuer à deux points sélectionnés dans l'image (17) une distance prédéfinie qui remplace une distance de positions d'objet prédéterminées, contenue dans les données géométriques (27) pour une attribution à la distance des positions clés (29), lors de la détermination de la distance entre l'objet (13) et la position de référence (14).

**2.** Système (11) selon la revendication 1,
**caractérisé en ce que**
l'unité de traitement électronique (19) est en outre conçue pour prendre en compte, lors de la détermination de la distance de l'objet (13) par rapport à la position de référence, en supplément des paramètres du capteur optique (15).

**3.** Système (11) selon la revendication 1 ou 2,
**caractérisé en ce que**
le capteur optique (15) comprend une caméra monoculaire.

**4.** Système (11) selon la revendication 3,
**caractérisé en ce que**
l'unité de traitement électronique (19) est en outre conçue pour prendre en compte, lors de la détermination de la distance de l'objet (13) par rapport à la position de référence (14), des données relatives aux propriétés d'imagerie de la caméra monoculaire (15).

**5.** Système (11) selon l'une des revendications précédentes,
**caractérisé en ce que**
au moins deux repères prédéfinis sont appliqués sur l'objet (13) et sont attribués auxdites au moins deux positions clés (29), et les données géométriques (27) incluent une distance respective entre deux repères prédéfinis respectifs.

**6.** Système (11) selon l'une des revendications précédentes,
**caractérisé en ce que**
l'unité de traitement électronique (19) est en outre conçue pour reconnaître les caractéristiques d'identification prédéterminées (25) dans l'image (17) acquise par le capteur optique (15), afin de déceler l'objet (13) dans le champ de vision du capteur optique (15).

**7.** Système (11) selon l'une des revendications précédentes,
**caractérisé en ce que**
les données géométriques (27) de l'objet (13) sont fixées préalablement à l'aide d'un modèle CAO de l'objet (13) et/ou en utilisant au moins un scanner 3D.

8. Système (11) selon l'une des revendications précédentes,
   **caractérisé en ce que**
   l'unité de traitement électronique (19) est en outre conçue pour surveiller le capteur optique (15) à l'aide d'une distance prédéfinie entre des positions de contrôle situées sur un ou plusieurs objets fixes (13).

9. Système (11) selon l'une des revendications précédentes,
   **caractérisé en ce que**
   l'unité de traitement électronique (19) est en outre conçue pour déterminer une position spatiale de l'objet (13) à l'aide d'une conversion de la distance de l'objet par rapport à la position de référence en utilisant des propriétés d'imagerie connues du capteur optique (15).

**Fig. 1**

**Fig. 2**

Daten zur Objekterkennung `25`

Daten zu den Abbildungs-eigenschaften der Kamera `39`

Daten zu Abständen der vorgegebenen Objektpositionen

`19`

`17`

Objekt-Klassifikation `31`

Ermittlung des Abstands zwischen Objekt und Kamera `37`

`27` `41`

Ausgabe: Abstand Objekt – Kamera im Objektraum

Monokulare Kamera

`15`

`17`

Erkennung von Schlüssel-positionen `33`

Ermittlung des Abstands der Schlüsselpositionen im Bildraum `35`

`11`

**EP 4 312 189 B1**

**IN DER BESCHREIBUNG AUFGEFÜHRTE DOKUMENTE**

**In der Beschreibung aufgeführte Patentdokumente**

- CN 111561906 A
- US 20170031369 A1
- CN 106127163 A